# EUROPÄISCHE PATENTSCHRIFT

(11) **EP 3 628 852 B1**
(45) Veröffentlichungstag und Bekanntmachung des Hinweises auf die Patenterteilung: **10.11.2021**
(21) Anmeldenummer: 18465579.3
(22) Anmeldetag: 28.09.2018
(51) Int. Cl.: F02D 9/04, F16K 11/04, F16K 27/02, F02M 26/66, F02M 26/69

(54) **VENTIL UND VERFAHREN ZUM HERSTELLEN EINES VENTILS**
VALVE AND METHOD FOR PRODUCING A VALVE
SOUPAPE ET PROCÉDÉ DE FABRICATION D'UNE SOUPAPE

(43) Veröffentlichungstag der Anmeldung: 01.04.2020
(73) Patentinhaber: Vitesco Technologies GmbH, 30165 Hannover (DE)
(72) Erfinder: Petca, Eduard Cornel, 300693 Timisoara (RO)

(56) Entgegenhaltungen:
- EP-A1- 0 770 775
- EP-A1- 0 920 359
- EP-A1- 1 018 599
- EP-A1- 1 263 638
- EP-A1- 2 444 646
- WO-A1-2009/027166
- DE-A1- 4 338 192
- DE-A1- 19 950 871
- US-A- 1 664 043
- US-A- 2 998 027

## Beschreibung

Es wird ein Ventil zum Öffnen und Schließen einer Abgasleitung angegeben sowie ein Verfahren zum Herstellen eines derartigen Ventils.

In Kraftfahrzeugen werden Ventile zum Öffnen und Schließen einer Abgasleitung eingesetzt. Wichtig für die Funktion solcher Ventile ist die Dichtheit, mit der das Ventil die Leitung verschließen kann. Gerade bei Gasen ist das Erreichen einer geringen Leckrate mit hohem Aufwand verbunden. Der Antrieb eines Stößels des Ventils wird typischerweise von einem Elektromotor und einem Getriebe gebildet. Das Getriebe dient dazu, die Drehbewegung des Elektromotors in eine translatorische Bewegung umzuwandeln, damit der mit dem Getriebe verbundene Stößel linear bewegt werden kann. Ein Dichtsitz des Ventils ist beispielsweise mittels eines spanenden Fertigungsverfahrens wie Drehen oder Fräsen aus einem Vollkörper hergestellt.

DE 199 50 871 A1 betrifft ein Abgasrückführventil mit einem Ventilgehäuse, das aus mehreren Tiefziehteilen zusammengesetzt ist.

WO 2009/027166 A1 betrifft ein Elektromagnetventil mit einem Ventilgehäuse, in das ein Ventilsitz eingelegt ist.

EP 2 444 646 A1 betrifft ein Abgasrückführventil mit einem Ventilgehäuse, das aus mehreren Bauteileinheiten zusammengesetzt ist.

Es ist wünschenswert, ein Ventil anzugeben, das einfach und zuverlässig ist. Zudem ist es wünschenswert, ein Verfahren zum Herstellen eines Ventils anzugeben, das eine einfache Herstellung des Ventils ermöglicht und kostengünstig ist.

Erfindungsgemäß weist ein Ventil zum Öffnen und Schließen einer Abgasleitung eines Kraftfahrzeugs einen Gehäusekörper auf. Das Ventil weist einen in dem Gehäusekörper angeordneten Stößel auf. Der Stößel ist an einem ersten Ende mit einem Antrieb koppelbar. Der Stößel ist ausgebildet, entlang einer Längsachse des Stößels bewegt zu werden. Das Ventil weist eine Ventilsitzhülse auf. An der Ventilsitzhülse ist ein Ventilsitz ausgebildet. Der Ventilsitz begrenzt eine Öffnung. Die Ventilsitzhülse ist in dem Gehäusekörper angeordnet. Die Ventilsitzhülse ist mittels eines Tiefziehverfahrens hergestellt. Die Ventilsitzhülse ist in einem Innenraum des Gehäusekörpers angeordnet. Die Ventilsitzhülse ist zumindest abschnittsweise in Kontakt mit Innenwänden des Gehäusekörpers, die den Innenraum umgeben. Die Ventilsitzhülse erstreckt sich entlang einer Längsachse. Das Ventil weist einen Schließkörper auf. Der Schließkörper ist mit dem Stößel verbunden, sodass der Schließkörper mittels einer Bewegung des Stößels zwischen einer Offenstellung und einer Schließstellung verstellbar ist. In der Offenstellung ist die Öffnung freigegeben. In der Schließstellung liegt der Schließkörper an dem Ventilsitz an und dichtet die Öffnung ab. Die Ventilsitzhülse weist an ihrem Ende mit dem größten Durchmesser eine schräge Flanke aufweist, wobei die schräge Flanke so ausgebildet ist, dass ein Einschieben der Ventilsitzhülse entlang der Längsachse in einer ersten Richtung in den Gehäusekörper möglich ist, und, dass bei einer Kraft, die entgegen der ersten Richtung auf die Ventilsitzhülse wirkt, die schräge Flanke zumindest leicht in die Innenwand des Gehäusekörpers eingedrückt wird, um die Ventilsitzhülse mittels einer Hinterhakung in dem Gehäusekörper axial zu fixieren.

Das Ventil weist die Ventilsitzhülse auf, die als separates Bauteil zum übrigen Gehäusekörper ausgebildet ist.

Der Gehäusekörper weist insbesondere mehrere Bauteile des Ventils auf und ist beispielsweise mit dem Antrieb koppelbar. Innerhalb des Gehäusekörpers wird die Ventilsitzhülse angeordnet. Der Dichtsitz ist nicht am Gehäusekörper direkt ausgebildet, sondern an der Ventilsitzhülse. Die Ventilsitzhülse umgibt die Öffnung, die von dem Schließkörper verschlossen werden kann. In der Schließstellung ist der Schließkörper in Kontakt mit der Ventilsitzhülse und insbesondere nicht in Kontakt mit dem Gehäusekörper. Die Ventilsitzhülse, die mittels Tiefziehen hergestellt ist, ist günstiger und mit geringem Material aufwand herstellbar als die Elemente, an denen herkömmlich die Ventilsitze angeordnet sind. Insbesondere ist der Ventilsitz nicht aus einem Vollkörper ausgeschnitten. Der herkömmliche Materialverlust ist somit vermeidbar. Die Ventilsitzhülse ist aus einem Metallblech geformt. Somit ist es möglich, den Gehäusekörper mit größeren Toleranzen zu fertigen. Die Ventilsitzhülse mit dem Ventilsitz ist einfach mit geringen Toleranzen herstellbar. Somit ist eine ausreichende Dichtheit im Betrieb realisierbar.

Gemäß einer Ausführungsform ist die Ventilsitzhülse mittels einer Presspassung in dem Gehäusekörper fixiert. Somit wird eine axiale Bewegung der Ventilsitzhülse relativ zum Gehäusekörper verlässlich blockiert.

Erfindungsgemäß ist die Ventilsitzhülse mittels einer Hinterhakung in dem Gehäusekörper axial fixiert. Insbesondere ist die Ventilsitzhülse so ausgebildet, dass sie zur Montage in den Gehäusekörper eingepresst werden kann. Bei einer Verschiebung entgegen der Montagerichtung dringt die Ventilsitzhülse zumindest mit einem Teil leicht in das Material des Gehäusekörpers ein. Somit ist eine Hinterhakung realisiert und eine axiale Bewegung blockiert.

Gemäß einer Ausführungsform ist der Schließkörper mittels eines Stanzverfahrens hergestellt. Beispielsweise ist der Schließkörper aus einem Metallblech ausgestanzt. Der Schließkörper ist so zumindest leicht federnd ausgebildet. Dies ermöglicht ein ausreichend festes Aufpressen auf den Dichtsitz in der Schließstellung bei gleichzeitiger Entlastung der Verbindung zwischen Schließkörper und Stößel.

Gemäß einer Ausführungsform weist die Ventilsitzhülse einen zweiten Ventilsitz auf. Der zweite Ventilsitz begrenzt eine zweite Öffnung. Die zweite Öffnung weist einen kleineren Durchmesser auf als die Öffnung. Gemäß einer Ausführungsform weist das Ventil einen zweiten Schließkörper auf. Der zweite Schließkörper ist mit dem Stößel verbunden, so dass der zweite Schließkörper mittels einer Bewegung des Stößels zwischen der Offenstellung, in der die zweite Öffnung freigegeben ist, und der Schließstellung verstellbar ist. In der Schließstellung dichtet der zweite Schließkörper die zweite Öffnung ab und liegt an dem zweiten Ventilsitz an. Der zweite Schließkörper weist einen kleineren Durchmesser auf als der Schließkörper. Der Durchmesser des Schließkörpers ist auf den Durchmesser der Öffnung abgestimmt. Der Durchmesser des zweiten Schließkörpers ist auf den Durchmesser der zweiten Öffnung abgestimmt. Dadurch, dass die Durchmesser des zweiten Schließkörpers und der zweiten Öffnung kleiner sind als die Durchmesser der Öffnung und des Schließkörpers, ist eine einfache Montage möglich und eine ausreichende Dichtigkeit im Betrieb realisiert.

Gemäß einer Ausführungsform weist die Ventilsitzhülse entlang der Längsachse mindestens eine Abstufung auf. Die Abstufung dient als Anschlag für die Ventilsitzhülse an dem Gehäusekörper. Somit ist im Betrieb und während der Montage eine axiale Bewegung der Ventilsitzhülse relativ zum Gehäusekörper begrenzt.

Ein Verfahren zum Herstellen eines Ventils, eines Ventils gemäß einer der beschriebenen Ausführungsformen, umfasst ein Bereitstellen eines Metallblechs. Das Metallblech wird tiefgezogen und dadurch wird die Ventilsitzhülse ausgebildet. Somit ist es mit geringem Materialaufwand zuverlässig möglich, die Ventilsitzhülse mit dem Ventilsitz herzustellen. Gemäß einer Ausführungsform wird ein weiteres Metallblech bereitgestellt. Das weitere Metallblech wird gestanzt und dadurch wird der Schließkörper ausgebildet. Somit ist es mit geringem Materialeinsatz möglich, einen ausreichend stabilen Schließkörper herzustellen. Beispielsweise ist das weitere Metallblech ein vergleichsweise dünnes Metallblech, sodass ein flexibler Schließkörper herstellbar ist.

Gemäß einer Ausführungsform wird der Gehäusekörper mit einem Innenradius bereitgestellt. Das Metallblech wird tiefgezogen, sodass die Ventilsitzhülse mit einem Außenradius ausgebildet wird. Der Außenradius ist größer als der Innenradius. Die Ventilsitzhülse wird in den Gehäusekörper eingepresst. Somit ist eine einfache und zuverlässige Verbindung der Ventilsitzhülse und des Gehäusekörpers möglich.

Insgesamt ist es möglich, ein kostengünstiges, kompaktes und leichtes Ventil anzugeben und herzustellen.

Das beschriebene Ventil eignet sich insbesondere für Linearventile, bei denen der Stößel entlang einer Richtung, insbesondere seiner Längsachse, linear bewegt wird. Weiterhin kann das Ventil auch einen weiteren Ventilsitz mit einer weiteren Ventilöffnung aufweisen (Doppellinearventil), die gleichzeitig zur ersten Ventilöffnung durch die Stößelbewegung mittels eines entsprechenden Schließkörpers verschlossen oder freigegeben werden kann. Das Ventil kann also als Doppellinearventil ausgebildet sein oder mit nur einem einzigen Schließkörper als Einfachlinearventil.

Beispielsweise ist das Ventil in einem Abgasrückführsystem eines Kraftfahrzeugs einsetzbar, um die Abgasleitung des Kraftfahrzeugs zu öffnen und zu schließen. Beispielsweise weist ein Abgasrückführsystem eines Kraftfahrzeugs das Ventil auf.

Weitere Vorteile, Merkmale und Weiterbildungen ergeben sich aus den nachfolgenden, in Verbindung mit den Figuren erläuterten Ausführungsbeispielen. Gleiche, gleichartige oder gleich wirkende Elemente können figurenübergreifend mit den gleichen Bezugszeichen versehen sein.

Es zeigen:
- Figur 1: eine schematische Schnittansicht eines bekannten Ventils gemäß dem Stand der Technik,
- Figur 2: eine schematische Schnittansicht eines Ventils gemäß einem Ausführungsbeispiel der Erfindung,
- Figur 3: eine schematische Schnittansicht des Ventils gemäß Figur 2, und
- Figur 4: eine schematische Detaildarstellung eines Teils des Ventils gemäß Figur 2.

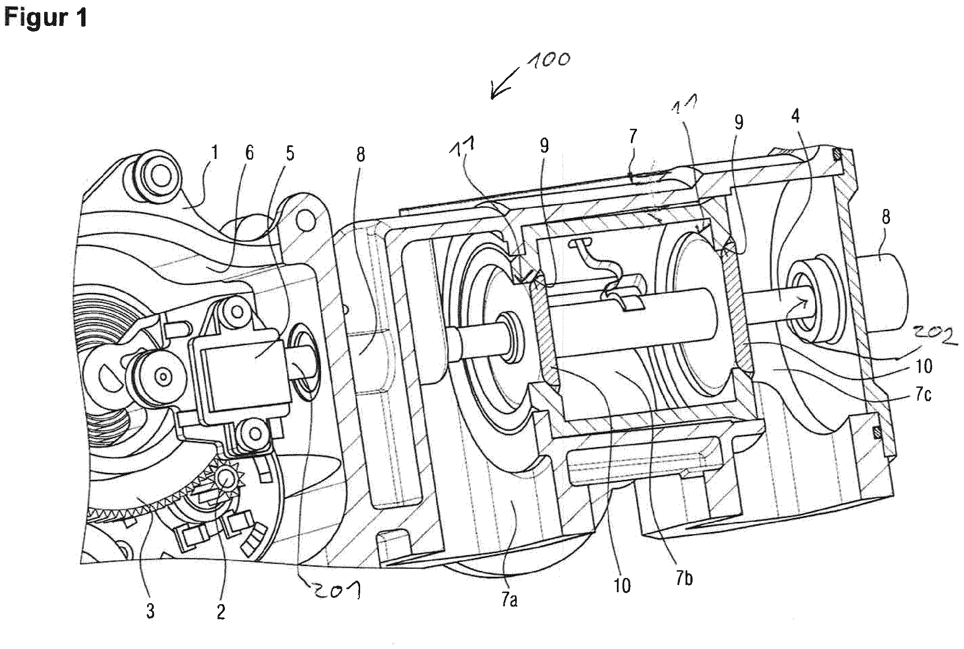

Figur 1 zeigt ein Ventil 100 gemäß dem Stand der Technik zum Öffnen und Schließen einer Abgasleitung. Das Ventil 100 in Figur 1 weist ein Gehäuse 1 auf, in dem ein Elektromotor 2 angeordnet ist. Mittels eines Getriebes 3 wird die Drehbewegung des Elektromotors 2 in eine lineare Bewegung eines Stößels 4 umgewandelt. Am Getriebe 3 ist ein Sensor 5 angeordnet, der mit einem am Stößel 4 befestigten Magneten zusammenwirkt. Der Stößel 4 erstreckt sich von der Getriebekammer 6 bis in eine Ventilkammer 7, wobei der Stößel 4 an zwei Stellen 8 gelagert ist. Die Ventilkammer 7 besteht aus drei hintereinander liegenden Teilkammern 7a, 7b, 7c, die jeweils durch einen Ventilsitz 9 voneinander getrennt sind. Zwei Schließkörper 10 sind so auf dem Stößel 4 angeordnet, dass sie sich bei einer Bewegung des Stößels 4 entlang einer Längsachse 205 des Stößels 4 an den jeweiligen Ventilsitz 9 anlegen und eine Öffnung 11 abdichten oder vom Ventilsitz 9 wegbewegen und die Öffnung 11 somit freigeben, dass ein Gas von einer Ventilkammer 7 in die andere strömen kann.

Im Folgenden wird ein Ventil 100 gemäß einem Ausführungsbeispiel der Erfindung beschrieben, das eine veränderte Ausbildung des Ventilsitzes 9 aufweist. Im Übrigen kann das Ventil 100 die Merkmale der anhand von Figur 1 beschriebenen Ausgestaltung aufweisen. Es sei jedoch darauf hingewiesen, dass das in Figur 1 beschriebene Ventil 100 exemplarisch zu verstehen ist und alternativ auch anderweitige Ausgestaltungen haben kann, ohne dass sich Einschränkungen für die nachfolgende Beschreibung des Ausführungsbeispiels der Erfindung ergeben.

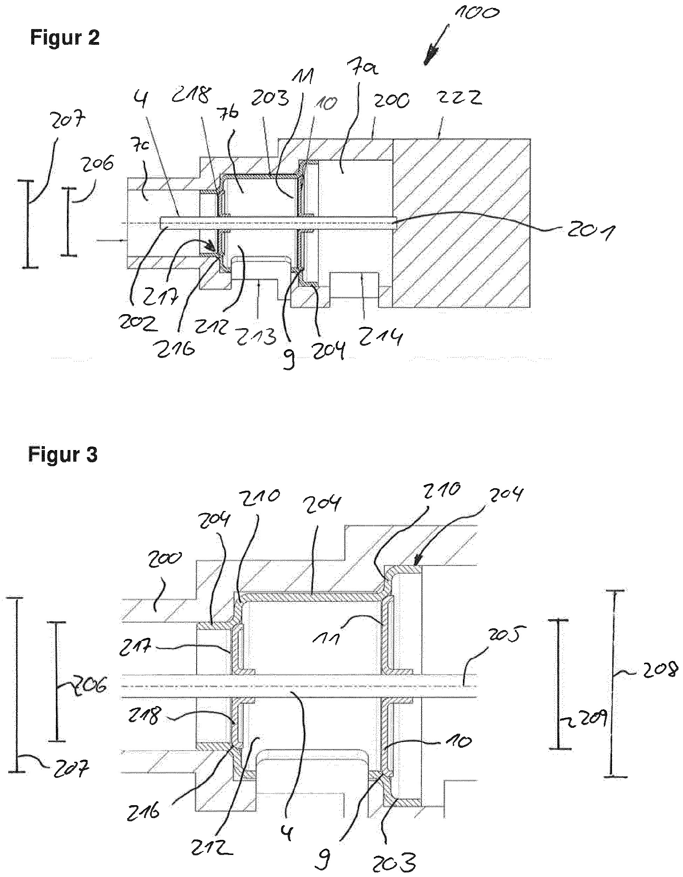

Figur 2 zeigt eine Schnittansicht des Ventils 100. Das Ventil weist einen Gehäusekörper 200 auf. Der Gehäusekörper ist beispielsweise aus einem Metall gebildet und kann vergleichsweise große Herstellungstoleranzen aufweisen. Ein Antrieb 22, der beispielsweise den Elektromotor 2 und das Getriebe 3 aufweist, ist mit dem Gehäusekörper 2 gekoppelt, beispielsweise verschraubt. Beispielsweise ersetzt der Gehäusekörper 200 somit das Gehäuse 1. Alternativ ist der Gehäusekörper 200 beispielsweise zusätzlich zu dem Gehäuse 1 vorhanden und an dem Gehäuse 1 befestigt.

Der Stößel 4 ist an einem ersten Ende 201 mit dem Antrieb 222 gekoppelt. Ausgehend von dem ersten Ende 201 erstreckt sich der Stößel 4 entlang der Längsachse 205 zu einem zweiten Ende 202.

Mit dem Stößel ist der Schließkörper 10 verbunden. Ein zweiter Schließkörper 218 ist ebenfalls mit dem Stößel verbunden. Die beiden Schließkörper 10, 218 sind entlang der Längsachse 205 versetzt zueinander angeordnet. Der Stößel 205 erstreckt sich in den Gehäusekörper 200 und insbesondere in einen Innenraum 212 des Gehäusekörpers 200. In dem Innenraum 212 sind auch die Schließkörper 10, 218 angeordnet.

Eine Ventilsitzhülse 203 ist im Innenraum 212 des Gehäusekörpers 200 angeordnet. Die Ventilsitzhülse 203 ist zumindest abschnittsweise in Kontakt mit den Innenwänden des Gehäusekörpers 200, die den Innenraum 212 umgeben.

Die Ventilsitzhülse 203 erstreckt sich entlang der Längsachse 205. Die äußere Form der Ventilsitzhülse 203 ist auf die Form des Innenraums 212 abgestimmt, sodass die Ventilsitzhülse stabil in dem Gehäusekörper 200 lagerbar ist.

An der Ventilsitzhülse 203 ist der Ventilsitz 9 für den Schließkörper 10 ausgebildet. An der Ventilsitzhülse 3 ist ein zweiter Ventilsitz 216 für den zweiten Schließkörper 218 ausgebildet. Der zweite Ventilsitz 216 umgibt eine zweite Öffnung 217, die mittels des zweiten Schließkörpers 218 verschließbar oder freigebbar ist.

Das Ventil 100 weist einen Einlass 213 auf, der insbesondere zwischen dem Schließkörper 10 und dem zweiten Schließkörper 218 angeordnet ist. Das Ventil 100 weist beispielsweise zwei Auslässe 214, 215 auf, die jeweils auf der dem Einlass 213 abgewandten Seite des Schließkörpers 10 und des zweiten Schließkörpers 218 angeordnet sind.

Figur 3 zeigt eine detaillierte Darstellung eines Teils des Ventils 100.

Die Ventilhülse 203 ist mittels einer Presspassung 204 in den Innenraum 212 des Gehäusekörpers 200 eingepresst. Dadurch ist die Ventilsitzhülse 203 stabil im Gehäusekörper 200 angeordnet. Die Ventilsitzhülse weist im gezeigten Ausführungsbeispiel zwei Abstufungen 210 auf, die mit entsprechenden Abstufungen des Gehäusekörpers 200 korrespondieren. Somit ist eine Verschiebung der Ventilsitzhülse 203 entlang einer Richtung der Längsachse 205 blockiert.

Ein Durchmesser 207 der Öffnung 11 ist größer als ein Durchmesser 206 der zweiten Öffnung 217. Somit ist die Abstufung 210 realisierbar. Zudem ist eine einfache Montage des Stößels 4 mit den beiden Schließkörpern 10, 218 möglich. Der Stößel 4 wird beginnend mit dem kleineren zweiten Schließkörper 218 entlang der Längsachse 205 in den Gehäusekörper 200 und die Ventilsitzhülse 203 eingebracht. Der Schließkörper 10 hat korrespondierend mit der Öffnung 11 einen größeren Durchmesser 209 als der zweite Schließkörper 218. Ein dritter Durchmesser 208 des zweiten Schließkörpers 218 ist kleiner als der Durchmesser 209 des Schließkörpers 10.

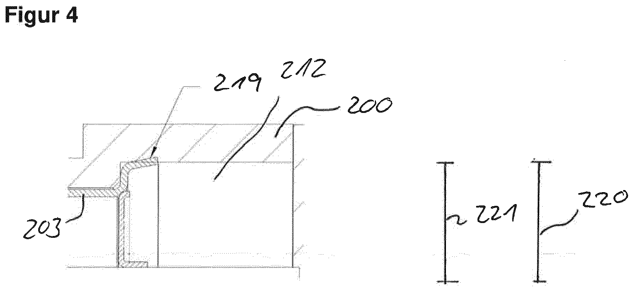

Figur 4 zeigt eine Möglichkeit der axialen Fixierung der Ventilsitzhülse 203 im Gehäusekörper 200. Erfindungsgemäß weist die Ventilsitzhülse 203 an ihrem Ende mit dem größten Durchmesser eine schräge Flanke auf. Die schräge Flanke ist so ausgebildet, dass ein Einschieben der Ventilsitzhülse 203 entlang der ersten Richtung in den Gehäusekörper 200 möglich ist. Bei einer Kraft, die entgegen der ersten Richtung auf die Ventilsitzhülse 203 wirkt, wird die schräge Flanke zumindest leicht in die Wand des Gehäusekörpers 200 eingedrückt. Diese verformt sich dabei beispielsweise leicht plastisch. Dadurch wird eine Hinterhakung 219 ausgebildet. Beispielsweise blockiert die Abstufung 210 eine Bewegung der Ventilsitzhülse 203 relativ zum Gehäusekörper 200 entlang der Längsachse 205 in eine Richtung. In die entgegengesetzte Richtung ist eine axiale Relativbewegung zwischen dem Gehäusekörper 200 und der Ventilsitzhülse 203 mittels der Hinterhakung 219 blockiert.

Alternativ oder zusätzlich ist die Ventilsitzhülse 203 mittels der Presspassung 204 im Gehäusekörper 200 fixiert. Ein Außenradius 221 der Ventilsitzhülse 203 ist größer ausgebildet als ein korrespondierender Innenradius 220 des Gehäusekörpers 200. Somit verspannt sich die Ventilsitzhülse 203 beim Einschieben in den Gehäusekörper 200 relativ zum Gehäusekörper 200 und ist dadurch befestigt und gehalten.

Die Ventilsitze 9 und 216 sind nicht am Gehäusekörper 200 direkt, sondern an der Ventilsitzhülse 203 ausgebildet. Die Ventilsitzhülse ist beispielsweise mittels eines Tiefziehverfahrens aus einem Metallblech hergestellt. Somit ist die Ventilsitzhülse unter Verweilung von Materialverlusten kostengünstig und ausreichend präzise herstellbar. Beispielsweise muss die Ventilsitzhülse 203 nach dem Tiefziehprozess nur wenig nachbearbeitet werden, um im Betrieb eine ausreichende Dichtheit des Ventils 100 gewährleisten zu können.

Die Schließkörper 10 und 218 sind beispielsweise jeweils mittels eines Stanzverfahrens aus einem Metallblech gefertigt.

Das Metallblech ist insbesondere relativ dünn, sodass leichte und flexible Schließkörper 10, 218 hergestellt werden können. Die Schließkörper 10, 218 sind beispielsweise jeweils mittels einer Verschweißung am Stößel 4 befestigt. Aufgrund der Flexibilität der Schließkörper 10, 218 wird insbesondere in der Schließstellung die Verschweißung weniger beansprucht, wenn die Schließkörper 10, 281 gegen ihre jeweiligen Ventilsitze 9, 216 gedrückt werden.

Aufgrund der zumindest abschnittsweisen konischen Form der Ventilsitzhülse 203 an der schrägen Flanke ist eine axiale Selbsthemmung der Ventilsitzhülse 203 relativ zum Gehäusekörper 200 ausbildbar. Dadurch kann gemäß Ausführungsbeispielen auf weitere Verbindungsmittel wie eine Verschweißung zwischen dem Gehäusekörper 200 und der Ventilsitzhülse 203 verzichtet werden.

Mittels des Prägeverfahrens beziehungsweise Stanzverfahrens sind die Schließkörper 10, 218 einfach als runde Stanzteile beziehungsweise Prägeteile herstellbar. Gemäß Ausführungsbeispielen ist die Presspassung 204 nur an dem Bereich der Ventilsitzhülse 203 ausgebildet, die den größten Durchmesser aufweist.

Das Ventil 100 weist einen kompakten und leichtgewichtigen Aufbau auf und gewährleistet einen zuverlässigen Betrieb. Zudem ist das Ventil 100 einfach und kostengünstig herstellbar.

## Patentansprüche

1. Ventil zum Öffnen und Schließen einer Abgasleitung, aufweisend:
- ein Gehäusekörper (200),
- einen in dem Gehäusekörper (200) angeordneten Stößel (4), der an einem ersten Ende (201) mit einem Antrieb koppelbar ist und ausgebildet ist, entlang einer Längsachse (205) des Stößels (4) bewegt zu werden,
- eine Ventilsitzhülse (203), an der ein Ventilsitz (9, 216) ausgebildet ist, der eine Öffnung (11, 217) begrenzt, wobei die Ventilsitzhülse (203) in dem Gehäusekörper (200) angeordnet ist und wobei die Ventilsitzhülse (203) mittels eines Tiefziehverfahrens hergestellt ist, wobei die Ventilsitzhülse (203) in einem Innenraum (212) des Gehäusekörpers (200) angeordnet ist, und die Ventilsitzhülse (203) zumindest abschnittsweise in Kontakt mit Innenwänden des Gehäusekörpers (200) ist, die den Innenraum (212) umgeben, und wobei die Ventilsitzhülse (203) sich entlang einer Längsachse (205) erstreckt, und
- einen Schließkörper (10, 218), der mit dem Stößel (4) verbunden ist, so dass der Schließkörper (10, 218) mittels einer Bewegung des Stößels (4) zwischen einer Offenstellung, in der die Öffnung (11, 217) freigegeben ist, und einer Schließstellung verstellbar ist, in der der Schließkörper (10, 218) an dem Ventilsitz (9, 216) anliegt und die Öffnung (11, 217) abdichtet, **dadurch gekennzeichnet, dass** die Ventilsitzhülse (203) an ihrem Ende mit dem größten Durchmesser eine schräge Flanke aufweist, wobei die schräge Flanke so ausgebildet ist, dass ein Einschieben der Ventilsitzhülse (203) entlang der Längsachse (205) in einer ersten Richtung in den Gehäusekörper (200) möglich ist, und, dass bei einer Kraft, die entgegen der ersten Richtung auf die Ventilsitzhülse (203) wirkt, die schräge Flanke zumindest leicht in die Innenwand des Gehäusekörpers (200) eingedrückt wird, um die Ventilsitzhülse (203) mittels einer Hinterhakung (219) in dem Gehäusekörper (200) axial zu fixieren.

2. Ventil nach Anspruch 1, bei dem die Ventilsitzhülse (203) mittels einer Presspassung in dem Gehäusekörper (200) fixiert ist.

3. Ventil nach einem der Ansprüche 1 bis 2, bei dem der Schließkörper (10, 2018) mittels eines Stanzverfahrens hergestellt ist.

4. Ventil nach einem der Ansprüche 1 bis 3, beim dem die Ventilsitzhülse (203) einen zweiten Ventilsitz (216) aufweist, der der eine zweite Öffnung (217) begrenzt, wobei die zweite Öffnung (217) einen kleineren Durchmesser (206) aufweist als die Öffnung (11).

5. Ventil nach Anspruch 4, aufweisend:
- einen zweiten Schließkörper (218), der mit dem Stößel (4) verbunden ist, so dass der zweite Schließkörper (218) mittels einer Bewegung des Stößels (4) zwischen der Offenstellung, in der die zweite Öffnung (217) freigegeben ist, und der Schließstellung verstellbar ist, in der der zweite Schließkörper (218) an dem zweiten Ventilsitz (216) anliegt und die zweite Öffnung (217) abdichtet, wobei der zweite Schließkörper (218) einen kleineren Durchmesser (208) aufweist als der Schließkörper (10).

6. Ventil nach einem der Ansprüche 1 bis 5, bei dem die Ventilsitzhülse (203) entlang der Längsachse (205) mindestens eine Abstufung (210) aufweist.

7. Verfahren zum Herstellen eines Ventils (100) nach einem der vorhergehenden Ansprüche, **gekennzeichnet durch**:
- Bereitstellen eines Metallblechs,
- Tiefziehen des Metallblechs, und dadurch
- Ausbilden der Ventilsitzhülse (203).

8. Verfahren nach Anspruch 7, umfassend:
- Bereitstellen eines weiteren Metallblechs,
- Stanzen des weiteren Metallblechs, und dadurch
- Ausbilden des Schließkörpers (10, 218).

9. Verfahren nach Anspruch 7 oder 8, umfassend:
- Bereitstellen des Gehäusekörpers (200) mit einem Innenradius (220),
- Tiefziehen des Metallblechs, sodass die Ventilsitzhülse (203) mit einem Außenradius (221) ausgebildet wird, wobei der Außenradius (221) größer ist als der Innenradius (220),
- Einpressen der Ventilsitzhülse (203) in den Gehäusekörper (200).

## Claims

1. Valve for opening and closing an exhaust-gas line, having:
- a housing body (200);
- a plunger (4) which is disposed in the housing body (200) and which at a first end (201) is capable of being coupled to a drive and is configured for being moved along a longitudinal axis (205) of the plunger (4);
- a valve seat sleeve (203) on which a valve seat (9, 216) which delimits an opening (11, 217) is embodied, wherein the valve seat sleeve (203) is disposed in the housing body (200), and wherein the valve seat sleeve (203) is produced by means of a deep-drawing method; wherein the valve seat sleeve (203) is disposed in an interior space (212) of the housing body (200), and the valve seat sleeve (203) at least in portions is in contact with internal walls of the housing body (200), said internal walls surrounding the interior space (212); and wherein the valve seat sleeve (203) extends along a longitudinal axis (205); and
- a closing member (10, 218) which is connected to the plunger (4) such that the closing member (10, 218) by means of a movement of the plunger (4) is adjustable between an open position in which the opening (11, 217) is released, and a closed position in which the closing member (10, 218) bears on the valve seat (9, 216) and seals the opening (11, 217), **characterized in that**
the valve seat sleeve (203) on the end thereof having the largest diameter has an oblique flank, wherein the oblique flank is configured such that push-fitting the valve seat sleeve (203) along the longitudinal axis (205) in a first direction into the housing body (200) is possible and, in the event of a force that acts on the valve seat sleeve (203) counter to the first direction, the oblique flank is at least slightly impressed into the internal wall of the housing body (200) so as to fix the valve seat sleeve (203) axially in the housing body (200) by means of a rearward latching mechanism (219) .

2. Valve according to Claim 1, wherein the valve seat sleeve (203) is fixed in the housing body (200) by means of a press-fit.

3. Valve according to one of Claims 1 to 2, wherein the closing member (10, 2018) is produced by means of a punching method.

4. Valve according to one of Claims 1 to 3, wherein the valve seat sleeve (203) has a second valve seat (216) which delimits a second opening (217), wherein the second opening (217) has a smaller diameter (206) than the opening (11).

5. Valve according to Claim 4, having:
- a second closing member (218) which is connected to the plunger (4) such that the second closing member (218) by means of a movement of the plunger (4) is adjustable between the open position in which the second opening (217) is released, and the closed position in which the second closing member (218) bears on the second valve seat (216) and seals the second opening (217), wherein the second closing member (218) has a smaller diameter (208) than the closing member (10).

6. Valve according to one of Claims 1 to 5, wherein the valve seat sleeve (203) along the longitudinal axis (205) has at least one step (210).

7. Method for producing a valve (100) according to one of the preceding claims, **characterized by**:
- providing a metal sheet;
- deep-drawing the metal sheet; and on account thereof
- configuring the valve seat sleeve (203).

8. Method according to Claim 7, comprising:
- providing a further metal sheet;
- punching the further metal sheet; and on account thereof
- configuring the closing member (10, 218).

9. Method according to Claim 7 or 8, comprising:
- providing the housing body (200) having an internal radius (220);
- deep-drawing the metal sheet such that the valve seat sleeve (203) is configured having an external radius (221), wherein the external radius (221) is larger than the internal radius (220);
- press-fitting the valve seat sleeve (203) into the housing body (200).

## Revendications

1. Soupape destinée à ouvrir et à fermer une conduite de gaz d'échappement, présentant :
- un corps de boîtier (200),
- un poussoir (4) disposé dans le corps de boîtier (200), qui peut à une première extrémité (201) être couplé avec un dispositif d'entraînement et est réalisé pour être déplacé le long d'un axe longitudinal (205) du poussoir (4),
- une douille de siège de soupape (203) au niveau de laquelle est réalisé un siège de soupape (9, 216) qui délimite une ouverture (11, 217), la douille de siège de soupape (203) étant disposée dans le corps de boîtier (200), et la douille de siège de soupape (203) étant fabriquée au moyen d'un procédé d'emboutissage profond, la douille de siège de soupape (203) étant disposée dans un espace intérieur (212) du corps de boîtier (200), et la douille de siège de soupape (203) étant au moins par endroits en contact avec des parois intérieures du corps de boîtier (200) qui entourent l'espace intérieur (212), et la douille de siège de soupape (203) s'étendant le long d'un axe longitudinal (205), et
- un corps de fermeture (10, 218) qui est relié au poussoir (4) de sorte que le corps de fermeture (10, 218) est réglable au moyen d'un déplacement du poussoir (4) entre une position ouverte dans laquelle l'ouverture (11, 217) est libérée et une position fermée dans laquelle le corps de fermeture (10, 218) est appliqué contre le siège de soupape (9, 216) et scelle l'ouverture (11, 217),
**caractérisée en ce que** la douille de siège de soupape (203) présente à son extrémité ayant le plus grand diamètre un flanc incliné, le flanc incliné étant réalisé de façon à permettre une insertion de la douille de siège de soupape (203) le long de l'axe longitudinal (205) dans une première direction dans le corps de boîtier (200), et
**en ce que** dans le cas d'une force qui agit sur la douille de siège de soupape (203) à l'opposé de la première direction, le flanc incliné est enfoncé au moins légèrement dans la paroi intérieure du corps de boîtier (200) pour fixer axialement la douille de siège de soupape (203) au moyen d'un crochet arrière (219) dans le corps de boîtier (200).

2. Soupape selon la revendication 1, dans laquelle la douille de siège de soupape (203) est fixée dans le corps de boîtier (200) au moyen d'un ajustement serré.

3. Soupape selon l'une quelconque des revendications 1 à 2, dans laquelle le corps de fermeture (10, 2018) est fabriqué au moyen d'un procédé d'estampage.

4. Soupape selon l'une quelconque des revendications 1 à 3, dans laquelle la douille de siège de soupape (203) présente un deuxième siège de soupape (216) qui délimite une deuxième ouverture (217), la deuxième ouverture (217) présentant un diamètre (206) inférieur à celui de l'ouverture (11).

5. Soupape selon la revendication 4, présentant :
- un deuxième corps de fermeture (218) qui est relié au poussoir de sorte que le deuxième corps de fermeture (218) est réglable au moyen d'un déplacement du poussoir (4) entre la position ouverte dans laquelle la deuxième ouverture (217) est libérée et la position fermée dans laquelle le deuxième corps de fermeture (218) est appliqué contre le deuxième siège de soupape (216) et scelle la deuxième ouverture (217), le deuxième corps de fermeture (218) présentant un diamètre (208) inférieur à celui du corps de fermeture (10) .

6. Soupape selon l'une quelconque des revendications 1 à 5, dans laquelle la douille de siège de soupape (203) présente au moins une gradation (210) le long de l'axe longitudinal (205).

7. Procédé de fabrication d'une soupape (100) selon l'une quelconque des revendications précédentes, **caractérisé par** les étapes consistant à :
- fournir une tôle métallique,
- emboutir la tôle métallique, et de ce fait
- réaliser la douille de siège de soupape (203).

8. Procédé selon la revendication 7, comprenant les étapes consistant à :
- fournir une autre tôle métallique,
- estamper l'autre tôle métallique, et de ce fait
- réaliser le corps de fermeture (10, 218).

9. Procédé selon la revendication 7 ou 8, comprenant les étapes consistant à :
- fournir le corps de boîtier (200) avec un rayon intérieur (220),
- emboutir la tôle métallique de telle sorte que la douille de siège de soupape (203) est réalisée avec un rayon extérieur (221), le rayon extérieur (221) étant supérieur au rayon intérieur (220),
- presser la douille de siège de soupape (203) dans le corps de boîtier (200).
